# EUROPÄISCHE PATENTANMELDUNG

(11) **EP 1 341 109 A2**
(43) Veröffentlichungstag der Anmeldung: **03.09.2003**
(21) Anmeldenummer: 03003541.4
(22) Anmeldetag: 17.02.2003
(51) Int. Cl.: G06F 17/60

(54) **Verfahren, System und Computerprogrammprodukt zur Darbietung von Multimedia-Inhalten in Aufzugsanlagen**

(30) Priorität: 01.03.2002 EP 02405157
(71) Anmelder: INVENTIO AG, CH-6052 Hergiswil (CH)
(72) Erfinder: Friedli, Paul, Dr. sc.tech., 5453 Remetschwil (CH); Meyer, Thomas Dipl.INF.-Ing.ETH, 6343 Rotkreuz (CH)

(57) **Zusammenfassung**

Die Erfindung bezieht sich auf ein Verfahren, ein System und ein Computerprogrammprodukt zur Darbietung von Multimedia-Inhalten in Aufzugsanlagen. Hierfür wird für einen Benutzer mindestens ein individuelles Benutzerprofil **(BP, BP', BP")** mit Multimedia-Inhalten geführt. Einem identifizierten Benutzer werden die in seinem Benutzerprofil (**BP, BP', BP"**) geführten Multimedia-Inhalte dargeboten. Der Benutzer verwaltet die im Benutzerprofil (**BP, BP', BP"**) geführten Multimedia-Inhalte selber.

## Beschreibung

Die Erfindung bezieht sich auf ein Verfahren, ein System und ein Computerprogrammprodukt zur Darbietung von Multimedia-Inhalten in Aufzugsanlagen gemäss der Definition der Patentansprüche.

Die Schrift US 6,288,688 offenbart ein rechnergestütztes System zur Verteilung und Anzeige von digitaler Werbung (short messages) in Aufzugskabinen. In den Aufzugskabinen sind Bildschirme montiert, die über Kommunikationsverbindungen mit einer Kontrolleinheit verbunden sind. Die Kontrolleinheit weist einen Datenspeicher mit digitaler Werbung auf. Die digitale Werbung wird einzeln adressiert an die Bildschirme versendet.

Unter Multimedia wird die Integration von unterschiedlichen Medien in einer Vorrichtung verstanden. Multimedia-Inhalte bestehen aus Musikstücken, SMS (Short Message Service), EMS (Enhanced Messaging Service), MMS (Multimedia Messaging Service), Texten, Bildern, Videos, Filmen, aber auch aus Düften, Lichteffekten, usw.. Multimedia-Inhalte lassen sich mittels Computer über Ein- und Ausgabemittel wie Bildschirme, Lautsprecher, Tastaturen, Mikrofone, Zerstäuber, Lampen, usw. darbieten.

Aufgabe der vorliegenden Erfindung ist es, ein Verfahren, ein System und ein Computerprogrammprodukt bereit zustellen, um Multimedia-Inhalte in Aufzugsanlagen darzubieten. Insbesondere sollen individuell auf den Benutzer der Aufzugsanlage zugeschnittene Multimedia-Inhalte dargeboten werden.

Diese Aufgabe wird durch die Erfindung gemäss der Definition der Patentansprüche gelöst.

Erfindungsgemäss wird einen Benutzer mindestens ein individuelles Benutzerprofil mit Multimedia-Inhalten geführt wird. Dieses Benutzerprofil ist personalisiert, d.h. es enthält vom Benutzer ausgewählte, bevorzugte Multimedia-Inhalte. Das Benutzerprofil ist reichhaltig, d.h. der Benutzer wählt bevorzugte Multimedia-Inhalte aus einem grossen Angebot aus. Das Benutzerprofil ist weitreichend, d.h. der Benutzer empfängt Multimedia-Inhalte, wo immer er identifiziert wird.

Vorteilhafterweise wird der Benutzer vor dem bzw. nach dem Betreten einer Aufzugskabine identifiziert. Die Identifikation erfolgt vorzugsweise per Identifikations-Code. Die Gültigkeit dieses erkannten Identifikations-Codes wird von einer Prüfvorrichtung geprüft. Bei gültigem Identifikations-Code gilt der Benutzer als identifiziert.

Einem identifizierten Benutzer werden die in seinem Benutzerprofil geführten Multimedia-Inhalte dargeboten. Vorteilhafterweise werden diese Multimedia-Inhalte aus mindestens einer Inhalte-Datenbank geladen und über mindestens ein Ausgabemittel vor der bzw. in der Aufzugskabine dargeboten. Multimedia-Inhalte werden von mindestens einem Provider bereitgestellt und in der Inhalte-Datenbank auf Abruf gespeichert. Vorteilhafterweise werden die Multimedia-Inhalte kategorisiert nach demographischen Förderpräferenzen, psychographischen Förderpräferenzen sowie situativen Förderpräferenzen dargeboten.

Der Benutzer verwaltet sein Benutzerprofil selber. Die Multimedia-Inhalte sind skalierbar, d.h. im dreidimensionalen Raum, der durch die Dimensionen Personalisierungsgrad, Reichhaltigkeit und Reichweite gespannt ist, wird ein für den Benutzer wertvoller, optimaler Inhalt bereitgestellt. Der Benutzer kann festlegen, welche Inhalte (was) er zeitlich (wann) und örtlich (wo) in welcher Form (wie und von wem) dargeboten haben möchte. Vorteilhafterweise erfolgt eine solche Auswahl und Bewertung der Multimedia - Inhalte über mindestens ein Eingabemittel. Vorteilhafterweise betätigt der Benutzer einen Bereich auf einer berührungsempfindlichen Bildschirm-Oberfläche. Bei positiver Akzeptanz wird der Multimedia-Inhalt im Benutzerprofil beibehalten, bei negativer Akzeptanz wird der Multimedia-Inhalt aus dem Benutzerprofil entfernt.

Das System arbeitet mit bekannten und bewährten Mitteln der Kommunikationstechnik und ist in installierten Aufzugsanlagen nachrüstbar. Hierzu werden mindestens eine Erkennungsvorrichtung zum Erkennen eines Identifikations-Codes, mindestens eine Prüfvorrichtung zum Identifizieren eines Benutzers anhand eines erkannten Identifikations-Codes, mindestens eine Inhalte-Datenbank zum Führen mindestens eines Benutzerprofils mit Multimedia-Inhalten und mindestens ein Ausgabemittel zum Darbieten von im Benutzerprofil geführten Multimedia-Inhalten installiert.

Im Folgenden wird die Erfindung anhand beispielhafter Ausführungsformen gemäss **Fig. 1 bis 4** im Detail erläutert. Hierbei zeigt:
- **Fig. 1**: eine schematische Darstellung einer beispielhaften Ausführungsform eines Systems zur Darbietung von Multimedia-Inhalte in Aufzugsanlagen,
- **Fig. 2**: eine Prinzipdarstellung eines Systems zur Darbietung von Multimedia-Inhalte in Aufzugsanlagen,
- **Fig. 3**: eine schematische Darstellung eines Ausgabemittels für das System gemäss **Fig. 1,** oder **2,** und
- **Fig. 4**: eine Prinzipdarstellung einer benutzergesteuerten Verwaltung von Benutzerprofilen für das System gemäss **Fig. 1, 2** oder **3**.

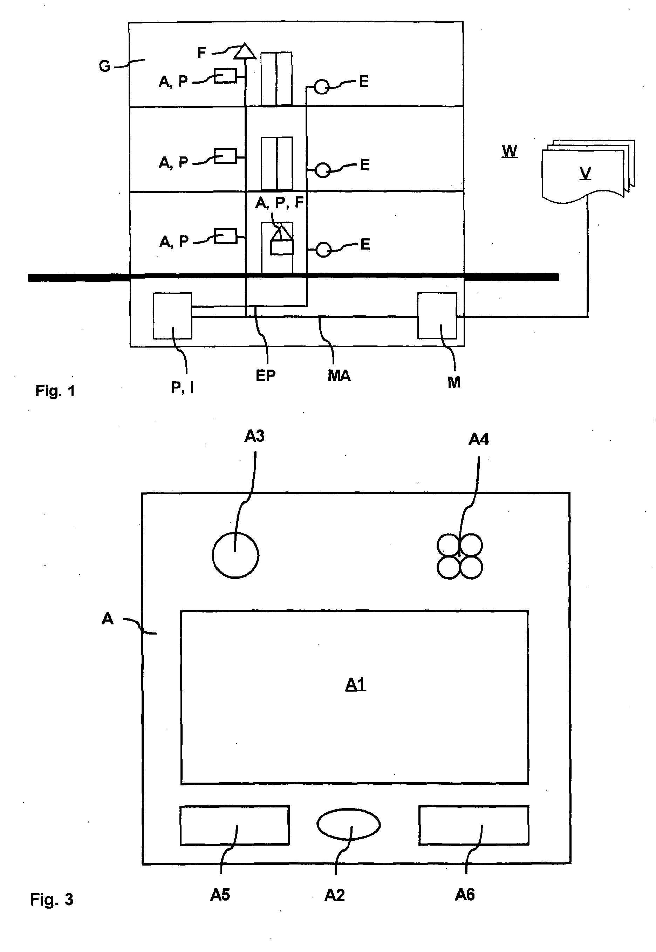

**Zum System, zur Aufzugsanlage: Fig. 1** zeigt schematisch eine beispielhafte Ausführungsform eines Systems zur Darbietung von Multimedia-Inhalte in Aufzugsanlagen. Das System umfasst mindestens eine Erkennungsvorrichtung **E,** mindestens eine Prüfvorrichtung **P**, mindestens eine Identifikations-Datenbank **I**, mindestens eine Aufzugssteuerung **B,** mindestens eine Inhalte-Datenbank **M** sowie mindestens ein Ausgabemittel **A**. Die Aufzugsanlage ist in einem Gebäude **G** bzw. Gebäudekomplex installiert und befördert Benutzer von einem Stockwerk zu einem anderen Stockwerk. Gemäss **Fig. 1** sind drei Stockwerke abgebildet. Die Aufzugsanlage wird beispielsweise elektrisch bzw. hydraulisch betrieben. Vorteilhafterweise ist in jedem Stockwerk eine Erkennungsvorrichtung **E** sowie ein Ausgabemittel **A** neben einer Stockwerktür zur Aufzugsanlage montiert. Alternativ ist es natürlich möglich, nur eine einzige Erkennungsvorrichtung **E**, beispielsweise im Erdgeschoss des Gebäudes **G** zu montieren. Vorteilhafterweise ist in einer Aufzugskabine der Aufzugsanlage ein Ausgabemittel **A** installiert. Gemäss **Fig. 1** befindet sich die Aufzugskabine im Erdgeschoss des Gebäudes **G**, durch die offenen Aufzugstüren ist das ein Ausgabemittel **A** der Aufzugskabine zu erkennen. Gemäss **Fig. 1** befinden sich die Prüfvorrichtung **P**, die Identifikations-Datenbank **I** und die Inhalte-Datenbank **M** in einem Untergeschoss des Gebäudes **G** und die Aufzugssteuerung **B** befindet sich auf einem oberen Stockwerk des Gebäudes **G**.

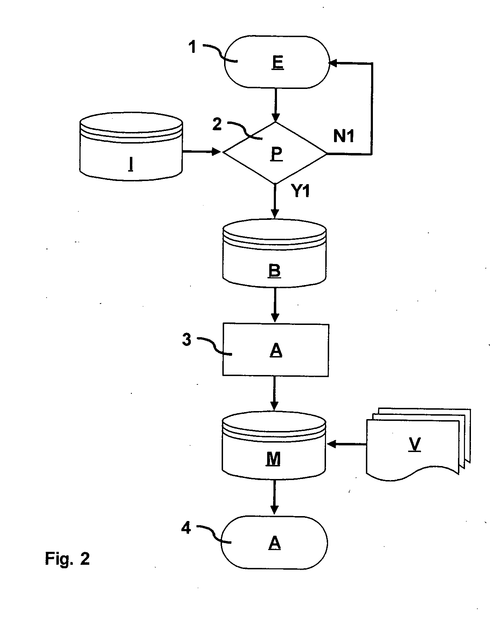

**Zur Identifikation: Fig. 2** zeigt eine beispielhafte Prinzipdarstellung eines Systems zur Darbietung von Multimedia-Inhalte. Zur Darbietung von Multimedia-Inhalten meldet sich ein Benutzer mit einem Identifikations-Code beim System an. Eine solche Anmeldung **1** erfolgt vorteilhafterweise über eine Erkennungsvorrichtung **E** zum Erkennen eines Identifikations-Codes. Dabei lassen sich mehrere Ausführungsformen der Anmeldung **1** unterscheiden:
- In einer ersten bevorzugten Ausführungsform der Anmeldung **1** wird der Identifikations-Code von einem Identifikationsgeber an die Erkennungsvorrichtung **E** übermittelt. Ein solches berührungsloses Erkennen eines Identifikations-Codes ist aus der Schrift EP 699,617 bekannt. Der Identifikationsgeber ist hier ein Transponder mit Transponderantenne und Geber-Elektronik. Die Geber-Elektronik des Identifikationsgebers weist eine Sende- und Empfangseinheit und einen Datenspeicher mit mindestens einem Identifikations-Code auf. Der Identifikationsgeber wird durch Induktion über ein elektromagnetisches Feld mit einer Betriebsspannung gespeist. Vorzugsweise strahlt die Erkennungsvorrrichtung **E** ein solches elektromagnetisches Feld ab. Sobald sich der Identifikationsgeber in der Nähe der Erkennungsvorrichtung **E** befindet, wird er mit Energie versorgt und sendet den Identifikations-Code an die Erkennungsvorrichtung **E**. Beispielsweise wird der Identifikationsgeber hierzu in einige Zentimeter bis mehrere Meter Entfernung vor die Erkennungsvorrichtung **E** gehalten. Die Erkennungsvorrichtung **E** empfängt den Identifikations-Code über eine entsprechend ausgebildete Sende- und Empfangsantenne. Beliebige les- bzw. beschreibbare Informationsgeber respektive Erkennungsvorrichtungen lassen sich realisieren. So sind Informationsgeber, die auf der Basis von Licht berührungslos mit einer Erkennungsvorrichtung wie ein Scanner kommunizieren, ebenfalls anwendbar. Auch sind Informationsgeber in Form von Magnetkarten, elektronischen Chips, usw., die über mindestens einen vermittelnden Kontakt mit einer Erkennungsvorrichtung kommunizieren, anwendbar.
- In weiteren Ausführungsformen der Anmeldung **1** wird der Identifikations-Code vom Benutzer mechanisch, beispielsweise über eine Tastatur der Erkennungsvorrichtung **E** und/oder akkustisch, beispielsweise über ein Mikrofon der Erkennungsvorrichtung **E** einzugeben. Natürlich kann der Fachmann bei Kenntnis der vorliegenden Erfindung andere Eingabemittel wie ein Ausgabemittel **A** mit berührungsempfindlicher Bildschirm-Oberfläche, eine Mobile-Telefon-Tastatur, usw. benutzen.
- Schliesslich ist es möglich, einen biometrischen Identifikations-Code des Benutzers wie einen Fingerabdruck, ein Irismuster, eine Gesichtskontur, usw. mit einer Erkennungsvorrichtung zu erkennen.

**Zur Prüfung:** Die Erkennungsvorrichtung **E** leitet den erkannten Identifikations-Code zur Prüfung **2** an die Prüfvorrichtung **P** weiter. Mindestens eine Prüfvorrichtung **P** ist notwendig, mehrere Prüfvorrichtungen **P** lassen sich einsetzen. Die Prüfvorrichtung **P** ist rechnergestützt. Unter "rechnergestützt" wird eine handelsübliche Recheneinheit wie ein PC (Personal Computer) mit dem Betriebssystem Windows, Apple, usw., bzw. eine Workstation mit dem Betriebssystem UNIX, usw. verstanden. Die Identifikations-Datenbank I ist vorzugsweise eine relationale Datenbank wie Access, Lotus Notes, Oracle, SAP, usw. bzw. eine XML (Extensible Markup Language)-Datenbank, usw.. Die Identifikations-Datenbank **I** kann in einer rechnergestützten Vorrichtung angeordnet sein. Erkennungsvorrichtung **E**, Prüfvorrichtung **P** und Identifikations-Datenbank **I** sind mit Ein- und Ausgängen zur Kommunikation versehen. Vorzugsweise erfolgt die Kommunikation zwischen Erkennungsvorrichtung **E**, Prüfvorrichtung **P** und Identifikations-Datenbank **I** auf einem Erkennungs-Bus **EP** gemäss einem bekannten Standard-Protokoll wie PCI (Peripheral Component Interconnect)-Bus, Ethernet, Token-Ring, usw., vorzugsweise per Funk und/oder Kabel. Die Prüfvorrichtung **P** kann mobil bzw. stationär ausgebildet sein. Prüfvorrichtung **P** und Identifikations-Datenbank **I** können - wie in **Fig. 1** gezeigt - in einem einzigen Gehäuse integriert sein, sie können aber auch separat an verschiedenen Orten platziert sein. Natürlich ist es auch möglich, Erkennungsvorrichtung **E**, Prüfvorrichtung **P** und Identifikations-Datenbank **I** in einem einzigen Gehäuse zu realisieren. Ferner ist es möglich Prüfvorrichtung **P** und Ausgabemittel **A** - wie in **Fig. 1** gezeigt - in einem einzigen Gehäuse zu integrieren.

Vorteilhafterweise ist in der Prüfvorrichtung **P** ein Computerprogrammprodukt installiert. Das Computerprogrammprodukt vergleicht den erkannten Identifikations-Code mit Identifikations-Adressen, die in der Identifikations-Datenbank **I** gespeichert sind. Der Benutzer ist über eine Identifikations-Adresse eindeutig identifizierbar. Für jede Identifikations-Adresse existiert ein Identifikations-Code. Beispielsweise ist eine Identifikations-Adresse genau dann einem erkannten Identifikations-Code zuordenbar, wenn Identifikations-Adresse und Identifikations-Code identisch sind. Gemäss **Fig. 2** liefert das Computerprogrammprodukt dann ein positives Zuordnungs-Ergebnis **Y1**, wenn eine der gespeicherten Identifikations-Adressen mit dem Identifikations-Code identisch ist, andernfalls liefert das Computerprogrammprodukt ein negatives Zuordnungs-Ergebnis **N1**. Ein solches negatives Zuordnungs-Ergebnis wird beispielsweise an die Erkennungsvorrichtung **E** übermittelt, von welcher der Identifikations-Code übermittelt worden ist und der Benutzer wird über ein Ausgabemittel A dieser Erkennungsvorrichtung **E** zu einer nochmaligen Anmeldung **1** aufgefordert. Bei mehrmaligem negativen Zuordnungs-Ergebnis kann dem Benutzer eine neutrale, nicht individualisierte Gäste-Adresse zugeordnet werden. Das Computerprogrammprodukt ist beispielsweise in einer gängigen und bewährten Computersprache geschrieben. Beispielsweise ist das Computerprogrammprodukt in einem Speicher gespeichert und wird zur Ausführung des Computerprogrammproduktes in einen Prozessor geladen.

**Zur Zuordnung von Multimedia-Inhalten:** Dem gemäss einem Identifikations-Code identifizierten Benutzer werden in einem Abruf **3** Multimedia-Inhalte aus der Inhalte-Datenbank **M** bereitgestellt. Die Inhalte-Datenbank **M** ist rechnergestützt. Sie weist Einund Ausgänge zur Kommunikation mit der Prüfvorrichtung **P,** dem Ausgabemittel **A** und dem Provider **V** auf. Vorteilhafterweise ist in der Inhalte-Datenbank **I** mindestens ein Computerprogrammprodukt installiert, das einer Identifikations-Adresse des Benutzers ein Benutzerprofil mit in der Inhalte-Datenbank **M** gespeicherten Multimedia-Inhalten zuordnet. Die Multimedia-Inhalte bestehen aus Musikstücken, SMS, EMS, MMS, Texten, Bildern Videos, Filmen, Düften, Lichteffekten, usw.. Auch hier gilt, dass das Computerprogrammprodukt in einer gängigen und bewährten Computersprache geschrieben sein kann. Beispielsweise ist das Computerprogrammprodukt in einem Speicher gespeichert und wird zur Ausführung des Computerprogrammproduktes in einen Prozessor geladen.

**Zur Übermittlung der Multimedia-Inhalte:** Die einer Identifikations-Adresse entsprechenden Multimedia-Inhalte werden in einer Darbietung **5** auf dem Ausgabemittel **A** vor der bzw. in der Aufzugskabine dargeboten. Die Inhalte-Datenbank **M** und das Ausgabemittel **A** kommunizieren vorzugsweise auf einem Inhalte-Bus **MA** gemäss einem bekannten Standard-Protokoll wie PCI-Bus, Ethernet, Token-Ring, usw. per Kabel und/oder per Funk. Natürlich ist es auch möglich Multimedia-Inhalte per Post - beispielsweise auf einer CD (Compact Disk) gespeichert - zu übermitteln.

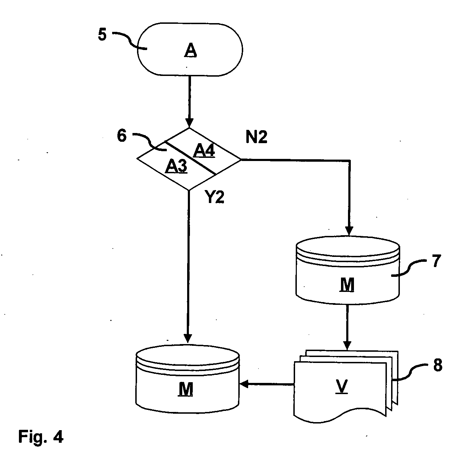

Gemäss **Fig. 1** kommunizieren die Ausgabemittel **A** in den Stockwerken per Kabel mit der Inhalte-Datenbank **M**, während das Ausgabemittel **A** in der Aufzugskabine per Funk über einen Sender **F** und per Kabel mit der Inhalte-Datenbank **M** kommuniziert. Das Ausgabemittel **A** ist gemäss **Fig. 3** beispielsweise ein Bildschirm mit mehreren Bereichen **A1, A2, A3, A4, A5, A6**. Beispielsweise handelt es sich beim Ausgabemittel **A** um einen rechnergestützten Bildschirm mit ersten, zweiten, dritten und vierten Bereichen **A1, A2, A3, A4** zur Ausgabe von Multimedia-Inhalten und mit fünften und sechsten Bereichen **A5,**

**A6** zur Kommunikation mit der Inhalte-Datenbank **M**. Die Kommunikation ist vorzugsweise bidirektionell. Das Ausgabemittel **A** empfängt von der Inhalte-Datenbank **M** Multimedia-Inhalte und gibt sie in einem ersten Bereich **A1** graphisch bzw. in einem zweiten Bereich **A2** akkustisch bzw. in einem dritten Bereich **A3** aromatisch bzw. in einem vierten Bereich **A4** optisch aus. Beispielsweise ist der erste Bereich **A1** ein Bildschirm, der zweite Bereich **A2** ein Lautsprecher, der dritte Bereich **A3** eine Duftmaschine und der vierte Bereich **A4** eine Lichtmaschine. Unter einer Duftmaschine wird ein Zerstäuber mit einem Duft bzw. mit mehreren, frei wähl- und mischbaren Düften verstanden, welcher Zerstäuber diese/n Duft/Düfte zerstäubt. Unter einer Lichtmaschine wird mindestens eine steuer- bzw. regelbare Lampe verstanden, welche Lampe Lichteffekte aussendet.

Vorteilhafterweise übermittelt das Ausgabemittel **A** Signale an die Inhalte-Datenbank **M** bzw. an die Prüfvorrichtung **P**. Beispielsweise sind der fünfte und sechste Bereich **A5, A6** berührungsempfindlich und ermöglichen die Generierung solcher Signale durch den Benutzer. Mit solchen Signalen kann ein Benutzer beispielsweise einen Multimedia-Inhalt bestätigen bzw. abwählen. Zum Bestätigen eines Multimedia-Inhaltes betätigt der Benutzer einen fünften Bereich **A5**, zum Abwählen eines eines Multimedia-Inhaltes betätigt der Benutzer einen sechsten Bereich **A6**. Solange ein Benutzer einen Multimedia-Inhalt nicht aktiv abwählt, gilt der Multimedia-Inhalt als erwünscht. Natürlich sind auch andere Mittel zur Generierung solcher Signale - wie ein Mikrofon gekoppelt mit einer Spracherkennung - zum Erfassen von Sprachbefehlen einsetzbar. Der Fachmann hat bei Kenntnis der vorliegenden Erfindung diesbezüglich vielfache Möglichkeiten.

Vorteilhafterweise ist in der Inhalte-Datenbank **I** mindestens ein Computerprogrammprodukt installiert, das Multimedia-Inhalte eines Benutzerprofils als mindestens ein cookie an ein Ausgabemittel A übermittelt. Unter einem cookie wird eine Datei verstanden, die eine Sequenz von Multimedia-Inhalten aufweist, welche in einer bestimmten Reihenfolge dargeboten wird. Beispielsweise besteht ein cookie aus einer Sequenz von zehn Seiten, die als Reihenfolge Seite 1 bis Seite 10 dargeboten wird. Beispielsweise handelt es sich dabei um eine Fortsetzungsgeschichte, die einem Benutzer bei sukzessiven Beförderungen im Aufzug dargeboten wird. Das cookie notiert sich den aktuellen Stand der Reihenfolge, so dass nachdem beispielsweise die Seiten 1 und 2 dargeboten worden sind, bei einer sukzessiven Beförderung die Seite 3 dargeboten wird. Vorteilhafterweise lässt sich solch ein cookie in einem Datenspeicher des Ausgabemittels **A** speichern. Vorteilhafterweise übermittelt die Inhalte-Datenbank **I** das cookie direkt an das Ausgabemittel **A**, in dessen Nähe sich der Benutzer befindet. Für diesen Zweck erhält ein Ausgabemittel **A** beispielsweise von der Aufzugssteuerung **B** eine Mitteilung, dass sich ein mit einem Identifikations-Code identifizierter Benutzer in seiner Nähe aufhält. Das Ausgabemittel **A** meldet sich daraufhin bei der Inhalte-Datenbank **I**. Beispielsweise übermittelt das Ausgabemittel **A** die Identifikations-Adresse des identifizierten Benutzers an die Inhalte-Datenbank **I**. Das Computerprogrammprodukt ordnet dieser Identifikations-Adresse ein Benutzerprofil mit Multimedia-Inhalten zu und übermittelt Multimedia-Inhalte dieses Benutzerprofils an dieses Ausgabemittel **A**. Das Computerprogrammprodukt ist beispielsweise in einer gängigen und bewährten Computersprache geschrieben. Beispielsweise ist das Computerprogrammprodukt in einem Speicher gespeichert und wird zur Ausführung des Computerprogrammproduktes in einen Prozessor geladen.

**Zur Struktur der Multimedia-Inhalte:** Die Multimedia-Inhalte werden vorteilhafterweise von einem System-Architekten in einer Struktur dargeboten. Die Struktur umfasst ein Gerüst, beispielsweise eine Reihenfolge von Seiten bzw. Spalten in Seiten, in welches Gerüst die Multimedia-Inhalte gefüllt werden. In einer vorteilhaften Ausführungsform werden die Multimedia-Inhalte mit einer Software namens Flash der Firma Macromedia als Flash-Film strukturiert. Die Software Flash erlaubt das einfache und rasche Erstellen von ansprechenden Designs, ausgefallenen Animationen, welche mit Musik versehen sind. Andere Software wie HTML (HyperText Markup Language) kann natürlich auch verwendet werden.

Die Multimedia-Inhalte sind kategorisiert. Der System-Architekt bietet dem Benutzer in seinem Benutzerprofil eine Vielzahl von kategorisierten Multimedia-Inhalten an. Solche Kategorien werden vorteilhafterweise unterteilt in Förderpräferenzen wie demographische Förderpräferenzen, psychographische Förderpräferenzen sowie situative Förderpräferenzen.

Demographische Förderpräferenzen sind beispielsweise:
- die Darbietungssprache (beispielsweise DE, GB, FR, IT, usw.)
- das Geschlecht des Benutzers (männlich / weiblich)
- das Alter des Benutzers (beispielsweise unterteilt in Altersklassen von 0-13, 14-20, 21-30, 31-40, 41-50, 51-65, 66-80, 81-120 Jahren)
- Zivilstand (beispielsweise ledig, verheiratet, geschieden, verwitwet)
- Einkommen (beispielweise unterteilt in Einkommensklassen von 0-30,000, 30,001-60,000, 60,001-90,000, 90,001-120,000, 120,001-180,000, >180,000 CHF/Jahr)

Psychographische Förderpräferenzen sind beispielsweise:
- Informationspräferenzen (beispielsweise Wetterbericht, Horoskop, Börsenspiegel, Sportnachrichten, Aktualitäten, Lokalnachrichten, usw.)
- Kulturpräferenzen (beispielsweise italienisches Essen, chinesisches Essen, Wein, Zigarren, usw.)
- Musikpräferenzen (beispielsweise Popmusik, klassische Musik, Jazz-Musik, usw.)
- Duftpräferenzen (beispielsweise Lavendel, Pfefferminze, Eukalyptus, usw.)
- Lichtpräferenzen (beispielsweise heftige Blitze, mattes warmes Licht, usw.)

Situative Förderpräferenzen sind beispielsweise:
- Zonenpräferenzen (beispielsweise vorbestimmte Zonen, Stockwerke eines Gebäudes **G**)
- Periodenpräferenzen (beispielsweise vorbestimmte Perioden (Vormittags, Nachmittags, Nachts), Uhrzeiten (, Kaffeepausenzeit, Mittagszeit), usw.)

Vorteilhafterweise ist ein Computerprogrammprodukt vorgesehen, welches Multimedia-Inhalte für ein Benutzerprofil kategorisiert. Das Computerprogrammprodukt ist beispielsweise in einer gängigen und bewährten Computersprache geschrieben. Beispielsweise ist das Computerprogrammprodukt in einem Speicher gespeichert und wird zur Ausführung des Computerprogrammproduktes in einen Prozessor geladen. Jede Kategorie weist mindestens einen spezifischen Multimedia-Inhalt auf. Vorzugsweise weist jede Kategorie mehrere spezifische Multimedia-Inhalte auf. Beispielsweise weist die Kategorie "Informationspräferenz" spezifische Multimedia-Inhalte wie "Wetterbericht, Horoskop, Börsenspiegel, Sportnachrichten, Aktualitäten, Lokalnachrichten, usw." auf. Die verschiedenen Kategorien sind miteinander gemäss mindestens eines logischen Gatters wie "UND", "ODER", "NICHT" verknüpfbar. Beispielsweise lässt sich eine psychographische Förderpräferenz durch eine situative Förderpräferenz modulieren, beispielsweise durch Anpassen der "Informationspräferenz" mit der "Periodenpräferenz", derart, dass morgens der Wetterbericht, mittags der Börsenspiegel und abends die Aktualitäten dargeboten werden. Die Multimedia-Inhalte sind somit skalierbar, d.h. im dreidimensionalen Raum, der durch die Dimensionen Personalisierungsgrad, Reichhaltigkeit und Reichweite gespannt ist, wird für den Benutzer eine Struktur mit spezifischen Multimedia-Inhalten bereitgestellt, die für den Benutzer einen wertvollen, optimalen Inhalt darstellen.

**Zur Beschaffung der Multimedia-Inhalte:** Die Multimedia-Inhalte werden vorteilhafterweise vom Provider **V** bezogen. Vorteilhafterweise kommuniziert die Inhalte-Datenbank **M** mit dem Provider **V** auf einem Kommunikationsmittel wie dem Internet und über etablierte Standard-Protokolle wie TCP/IP (Transmission Control Protocol / Internet Protocol), FTP (File Transfer Protocol), usw.. Die Inhalte-Datenbank **M** arbeitet vorteilhafterweise mit einer Software, basierend auf der Open Services Gateway Initiative (OSGi) Spezifikation. OSGi hat einen viel beachteten offenen Standard gesetzt, wobei die Update- bzw. Upgrade-Möglichkeiten von Multimedia-Inhalten durch den Provider **V** Aktualität und ein hohes Mass an Individualisierbarkeit ermöglichen. Die Multimedia-Inhalte werden vorzugsweise mit einem Bestellformular beim Provider **V** bezogen. Vorteilhafterweise ist ein Computerprogrammprodukt vorgesehen, welches die für die gesamte Inhalte-Datenbank **M** und pro Aktualisierungsintervall vom Provider **V** zu aktualisierenden Multimedia-Inhalte auflistet. Das Computerprogrammprodukt ist beispielsweise in einer gängigen und bewährten Computersprache geschrieben. Beispielsweise ist das Computerprogrammprodukt in einem Speicher gespeichert und wird zur Ausführung des Computerprogrammproduktes in einen Prozessor geladen. Die Aktualisierungsintervalle können je nach Kategorie variieren, beispielsweise wird das Horoskop alle 24 Stunden aktualisiert, der Wetterbericht wird alle 12 Stunden aktualisiert, während der Börsenspiegel alle 2 Minuten aktualisiert wird. Beispielhafte Aktualisierungsintervalle sind alle 24 bzw. alle 8 alle 2 Stunden bzw. alle 60 bzw. alle 15 bzw. alle 2 Minuten bzw. alle 60 bzw. alle 15 Sekunden.

**Zur Verwaltung der Multimedia-Inhalte: Fig. 4** zeigt eine Prinzipdarstellung der Verwaltung 6 der Multimedia-Inhalte der Inhalte-Datenbank **M**. Der Benutzer verwaltet sein Benutzerprofil selber. Der Vorteil einer solchen Selbstverwaltung ist die rasche, direkte, unkomplizierte und intuitive Realisierung dieser Selbstverwaltung. Rasch und direkt ist diese Selbstverwaltung, weil der Benutzer die Änderungen direkt und sofort bei Konsum am Ausgabemittel **A** eingibt. Unkompliziert und intuitiv ist diese Selbstverwaltung, weil der Benutzer einen selbsterklärenden Bereich auf dem Ausgabemittel **A** betätigt und keine weiteren Geräte wie ein separates Eingabemittel benötigt. Beispielsweise werden dem Benutzer auf dem Ausgabemittel **A** in einer Darbietung **5** Multimedia-Inhalte angeboten, welche der Benutzer bewertet. Zur Verwaltung **6** wählt der Benutzer vorteilhafterweise kategorienweise zwischen verschiedenen Multimedia-Inhalte aus. Beispielsweise betätigt/berührt der Benutzer hierzu einen fünften bzw. sechsten Bereich **A5, A6** auf einer berührungsempfindlichen Bildschirm-Oberfläche des Ausgabemittels **A** gemäss **Fig. 3**. Bei positiver Akzeptanz **Y2** wird der spezifische Multimedia-Inhalt dieser Kategorie im Benutzerprofil beibehalten, bei negativer Akzeptanz **N2** wird der spezifische Multimedia-Inhalt dieser Kategorie aus dem Benutzerprofil entfernt und durch einen anderen der spezifische Multimedia-Inhalt dieser Kategorie ersetzt. Beispielsweise erfolgt bei positiver Akzeptanz **Y2** eine Nach-Bestellung **7** des beizubehaltenden spezifischen Multimedia-Inhaltes, während bei negativer Akzeptanz **N2** eine Neu-Bestellung **8** eines anderen spezifischen Multimedia-Inhaltes der Kategorie erfolgt. Beispielsweise wird bei negativer Akzeptanz vom Multimedia-Inhalt "Popmusik" eine andere Musikpräferenz wie "Jazz-Musik" dargeboten, usw..

Die Verwaltung **6** der Multimedia-Inhalte erfolgt vorteilhafterweise intuitiv durch den Benutzer. Zur Nach-Bestellung **7** berührt der Benutzer beispielsweise einen dritten Bereich **A3** auf dem Ausgabemittel **A**, zur Neu-Bestellung **8** berührt der Benutzer beispielsweise einen sechsten Bereich **A6** auf dem Ausgabemittel **A**. Diese fünften bzw. sechsten Bereiche **A5, A6** unterscheiden sich beispielsweise durch Logos wie ein lachendes Gesicht für eine Nach-Bestellung **7** und ein weinendes Gesicht für eine Neu-Bestellung **8**. Die berührungsempfindlichen Bereiche **A5, A6** generieren Signale, welche an die Inhalte-Datenbank **M** übermittelt werden. Die Inhalte-Datenbank **M** führt gemäss dieser Signale eine Nach-Bestellung **7** respektive Neu-Bestellung **8** von spezifischen Multimedia-Inhalten durch. Bei der nächsten Aktualisierung der Multimedia-Inhalte durch den Provider **V** werden dem Benutzer nachbestellte respektive neu bestellte Multimedia-Inhalte dargeboten. Vorteilhafterweise ist ein Computerprogrammprodukt vorgesehen, welches die Multimedia-Inhalte des Benutzerprofiles gemäss Signalen zur Nach-Bestellung **7** respektive Neu-Bestellung **8** nachbestellt bzw. neubestellt. Das Computerprogrammprodukt ist beispielsweise in einer gängigen und bewährten Computersprache geschrieben. Beispielsweise ist das Computerprogrammprodukt in einem Speicher gespeichert und wird zur Ausführung des Computerprogrammproduktes in einen Prozessor geladen.

## Patentansprüche

1. Verfahren zur Darbietung von Multimedia-Inhalten in Aufzugsanlagen,
**dadurch gekennzeichnet,**
**dass** für einen Benutzer mindestens ein individuelles Benutzerprofil **(BP, BP', BP")** mit Multimedia-Inhalten geführt wird,
**dass** der Benutzer identifiziert wird,
**dass** dem identifizierten Benutzer die in seinem Benutzerprofil **(BP, BP', BP")** geführten Multimedia-Inhalte dargeboten werden, und
**dass** die Multimedia-Inhalte im Benutzerprofil **(BP, BP', BP")** vom Benutzer selber verwaltet werden.

2. Verfahren gemäss Anspruch 1, **dadurch gekennzeichnet, dass** das Benutzerprofil **(BP, BP', BP")** mit kategorisierten Multimedia-Inhalte geführt wird und/oder dass dem Benutzer ein Benutzerprofil **(BP, BP', BP")** mit kategorisierten Multimedia-Inhalten angeboten wird und/oder dass kategorisierte Multimedia-Inhalten des Benutzerprofil **(BP, BP', BP")** vom Benutzer kategorienweise bewertet werden.

3. Verfahren gemäss Anspruch 2, **dadurch gekennzeichnet, dass** Multimedia-Inhalte gemäss mindestens einer demographischen Förderpräferenz bzw. mindestens einer psychographischen Förderpräferenz bzw. mindestens einer situativen Förderpräferenz kategorisiert wird/werden.

4. Verfahren gemäss einem der Ansprüche 1 bis 3, **dadurch gekennzeichnet, dass** bei positiver Akzeptanz **(Y2)** ein spezifischer Multimedia-Inhalt nachbestellt wird und/oder dass bei negativer Akzeptanz **(N2)** ein spezifischer Multimedia-Inhalt neubestellt wird.

5. Verfahren gemäss einem der Ansprüche 1 bis 4, **dadurch gekennzeichnet, dass** die Auswahl und Bewertung von Multimedia-Inhalte im Benutzerprofil **(BP, BP', BP")** vom Benutzer auf einem Ausgabemittel **(A)** zur Darbietung der Multimedia-Inhalte des Benutzerprofiles **(BP, BP', BP")** durchgeführt wird.

6. Verfahren gemäss einem der Ansprüche 1 bis 5, **dadurch gekennzeichnet, dass** Multimedia-Inhalte gemäss Signalen zur Nach-Bestellung **(7)** bzw. Neu-Bestellung **(8)** von Multimedia-Inhalten des Benutzerprofiles **(BP, BP', BP")** bei einem Provider **(V)** nachbestellt bzw. neubestellt werden.

7. System zur Darbietung von Multimedia-Inhalten in Aufzugsanlagen,
**dadurch gekennzeichnet,**
**dass** mindestens eine Erkennungsvorrichtung **(E)** einen Identifikations-Code erkennt,
**dass** mindestens eine Prüfvorrichtung **(P)** den erkannten Identifikations-Code identifiziert,
**dass** mindestens eine Inhalte-Datenbank **(M)** für einen Benutzer mindestens ein individuelles Benutzerprofil **(BP, BP', BP")** mit Multimedia-Inhalten führt, und
**dass** mindestens ein Eingabemittel zur Auswahl und Bewertung des Benutzerprofiles **(BP, BP', BP")** vorgesehen ist.

8. System gemäss Anspruch 7, **dadurch gekennzeichnet, dass** mindestens ein Ausgabemittel **(A)** zur Darbietung der Multimedia-Inhalte des Benutzerprofiles **(BP, BP', BP")** mit fünften bzw. sechsten Bereichen **(A5, A6)** als Eingabemittel zur Auswahl und Bewertung des Benutzerprofiles **(BP, BP', BP")** vorgesehen ist.

9. Computerprogrammprodukt zur Darbietung von Multimedia-Inhalten in Aufzugsanlagen,
**dadurch gekennzeichnet,**
**dass** das Computerprogrammprodukt mindestens einen erkannten Identifikations-Code eines Benutzers mit Identifikations-Adressen vergleicht,
**dass** das Computerprogrammprodukt den Benutzer durch Zuordnung des erkannten Identifikations-Codes zu einer Identifikations-Adresse identifiziert,
**dass** das Computerprogrammprodukt der Identifikations-Adresse ein individuelles Benutzerprofil **(BP, BP', BP")** mit Multimedia-Inhalten zuordnet, und
**dass** das Computerprogrammprodukt Signale zur Nach-Bestellung **(7)** bzw. Neu-Bestellung **(8)** von Multimedia-Inhalten des Benutzerprofiles **(BP, BP', BP")** empfängt.

10. Computerprogrammprodukt gemäss Anspruch 9, **dadurch gekennzeichnet, dass** das Computerprogrammprodukt Multimedia-Inhalte im Benutzerprofil **(BP, BP', BP")** kategorisiert und/oder dass das Computerprogrammprodukt Multimedia-Inhalte gemäss mindestens einer Förderpräferenz des Benutzers kategorisiert und/oder dass das Computerprogrammprodukt Multimedia-Inhalte gemäss Signalen zur Nach-Bestellung **(7)** bzw. Neu-Bestellung **(8)** von Multimedia-Inhalten des Benutzerprofiles **(BP, BP', BP")** bei einem Provider **(V)** nachbestellt bzw. neubestellt.
